# FASCICULE DE BREVET EUROPEEN

(11) **EP 0 670 813 B1**
(45) Date de publication et mention de la délivrance du brevet: **12.03.2003**
(21) Numéro de dépôt: 94928934.2
(22) Date de dépôt: 29.09.1994
(51) Int. Cl.: C01B 33/193, C08K 3/36, C08L 21/00

(54) **SILICE PRECIPITEE**
FÄLLUNGSKIESELSÄURE
PRECIPITATED SILICA

(30) Priorité: 29.09.1993 FR 9311553; 12.08.1994 FR 9410046
(43) Date de publication de la demande: 13.09.1995
(73) Titulaire: RHODIA CHIMIE, 92408 Courbevoie Cédex (FR)
(72) Inventeur: CHEVALLIER, Yvonick, F-69270 Fontaines-Saint-Martin (FR); PRAT, Evelyne, F-93500 Pantin (FR)
(74) Mandataire: Delenne, Marc
(86) Numéro de dépôt international: FR9401143
(87) Numéro de publication internationale: WO95009127

(56) Documents cités:
- EP-A- 0 407 262
- EP-A- 0 520 862
- US-A- 2 731 326
- CHEMICAL ABSTRACTS, vol. 77, no. 6, 7 Août 1972, Columbus, Ohio, US; abstract no. 37184d, page 167 ; & JP,B,7 204 609 (TOKUYAMA SODA CO., LTD.) 8 Février 1972

## Description

La présente invention concerne un nouveau procédé de préparation de silice précipitée, des silices précipitées se présentant sous forme de poudre, de billes sensiblement sphériques ou de granulés, et leur application comme charge renforçante pour les élastomères.

On sait que la silice précipitée est utilisée depuis longtemps comme charge blanche renforçante dans les élastomères, en particulier dans les pneumatiques.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée).

En outre, de telles interactions silice/silice tendent, à l'état cru, à augmenter la raideur et la consistance des mélanges, rendant ainsi leur mise en oeuvre plus difficile.

Le problème se pose de disposer de charges qui, tout en pouvant avoir une taille relativement élevée, présentent une aptitude à la dispersion dans les élastomères très satisfaisante.

La présente invention a pour but d'obvier aux inconvénients précités et de résoudre le problème sus-mentionné.

Plus précisément, elle a notamment pour but de proposer un nouveau procédé de préparation de silice précipitée ayant, de manière avantageuse, une aptitude à la dispersion (et à la désagglomération) et/ou des propriétés renforçantes globalement améliorées, en particulier qui, utilisées à titre de charge renforçante pour élastomères, confère à ces derniers un excellent compromis entre leurs différentes propriétés mécaniques.

L'invention concerne également des silices précipitées telles que revendiquées qui se présentent sous forme de poudre, de billes sensiblement sphériques ou, événtuellement, de granulés, et qui, tout en présentant une taille relativement élevée, ont une aptitude à la dispersion (et à la désagglomération) très satisfaisante et des propriétés renforçantes globalement améliorées.

Elle est relative enfin à l'utilisation desdites silices précipitées comme charge renforçante pour élastomères.

Ainsi, l'un des objets de l'invention est un procédé de préparation de silice précipitée telle que revendiquée du type comprenant la réaction d'un silicate de métal alcalin M avec un agent acidifiant ce par quoi l'on obtient une suspension de silice précipitée, puis la séparation et le séchage de cette suspension, caractérisé en ce qu'on réalise la précipitation de la manière suivante :
(i) on forme un pied de cuve initial comportant une partie de la quantité totale du silicate de métal alcalin M engagé dans la réaction, la concentration en silicate exprimée en SiO₂ dans ledit pied de cuve étant d'au plus 15 g/l,
(ii) on ajoute l'agent acidifiant audit pied de cuve initial jusqu'à ce qu'au moins 50 % de la quantité de M₂O présente dans ledit pied de cuve initial soient neutralisés,
(iii) on ajoute au milieu réactionnel simultanément de l'agent acidifiant et la quantité restante de silicate de métal alcalin M telle que le rapport quantité de silicate ajoutée (exprimée en SiO₂)/quantité de silicate présente dans le pied de cuve initial (exprimée en SiO₂),appelé taux de consolidation, soit entre 12 et 100.

Il a été ainsi trouvé qu'une concentration très faible en silicate exprimée en SiO₂ dans le pied de cuve initial ainsi qu'un taux de consolidation approprié lors de l'étape d'addition simultané constituaient des conditions importantes pour conférer aux produits obtenus leurs excellentes propriétés.

Il est à noter, d'une manière générale, que le procédé concerné est un procédé de synthèse de silice de précipitation, c'est-à-dire que l'on fait agir un agent acidifiant sur un silicate de métal alcalin M.

Le choix de l'agent acidifiant et du silicate se fait d'une manière bien connue en soi. On peut rappeler qu'on utilise généralement comme agent acidifiant un acide minéral fort tel que l'acide sulfurique, l'acide nitrique ou l'acide chlorhydrique, ou'un acide organique tel que l'acide acétique, l'acide formique ou l'acide carbonique.

On peut par ailleurs utiliser en tant que silicate toute forme courante de silicates tels que métasilicates, disilicates et avantageusement un silicate de métal alcalin M dans lequel M est le sodium ou le potassium.

De manière générale, on emploie, comme agent acidifiant, l'acide sulfurique, et, comme silicate, le silicate de sodium.

Dans le cas où l'on utilise le silicate de sodium, celui-ci présente, en général, un rapport molaire SiO₂/Na₂O compris entre 2 et 4, plus particulièrement entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate. La quantité de silicate présente dans ce pied de cuve initial ne représente avantageusement qu'une partie de la quantité totale de silicate engagée dans la réaction.

Selon une caractéristique essentielle du procédé de préparation selon l'invention, la concentration en silicate dans le pied de cuve initial est inférieure à 15 g de SiO₂ par litre.

Cette concentration peut être d'au plus 11 g/l et, éventuellement, d'au plus 8 g/l.

Notamment lorsque la séparation effectuée ultérieurement lors du procédé selon l'invention comprend une filtration effectuée au moyen d'un filtre presse, cette concentration est de préférence d'au moins 8 g/l, en particulier comprise entre 10 et 15 g/l, par exemple entre 11 et 15 g/l ; le séchage mis en oeuvre plus loin dans le procédé selon l'invention est alors avantageusement effectué par atomisation au moyen d'un atomiseur à buses.

Les conditions imposées à la concentration en silicate dans le pied de cuve initial conditionnent en partie les caractéristiques des silices obtenues.

Le pied de cuve initial peut comprendre un électrolyte. Néanmoins, de préférence, aucun électrolyte n'est utilisé au cours du procédé de préparation selon l'invention ; en particulier, de manière préférée, le pied de cuve initial ne comprend pas d'électrolyte.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

La deuxième étape consiste à ajouter l'agent acidifiant dans le pied de cuve de composition décrite plus haut.

Ainsi, dans cette deuxième étape, on ajoute l'agent acidifiant audit pied de cuve initial jusqu'à ce qu'au moins 50 % de la quantité de M₂O présente dans ledit pied de cuve initial soient neutralisés.

De manière préférée, dans cette deuxième étape, on ajoute l'agent acidifiant audit pied de cuve initial jusqu'à ce que 50 à 99 % de la quantité de M₂O présente dans ledit pied de cuve initial soient neutralisés.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration est de préférence comprise entre 40 et 180 g/l, par exemple entre 60 et 130 g/l.

Une fois qu'est atteinte la valeur souhaitée de quantité de M₂O neutralisé, on procède alors à une addition simultanée (étape (iii)) d'agent acidifiant et d'une quantité de silicate de métal alcalin M telle que le taux de consolidation, c'est-à-dire le rapport quantité de silicate ajoutée (exprimée en SiO₂) /quantité de silicate présente dans le pied de cuve initial (exprimée en SiO₂), soit entre 12 100.

De préférence, on procède à cette addition simultanée d'agent acidifiant et d'une quantité de silicate de métal alcalin M telle que le taux de consolidation est plus particulièrement compris entre 12 et 50, notamment entre 13 et 40.

De manière préférée, pendant toute l'étape (iii), la quantité d'agent acidifiant ajoutée est telle que 80 à 99 %, par exemple 85 à 97 %, de la quantité de M₂O ajoutée soient neutralisés.

L'agent acidifiant utilisé lors de l'étape (iii) peut être dilué ou concentré ; sa normalité peut être comprise entre 0,4 et 36 N, par exemple entre 0,6 et 1,5 N.

En particulier, dans le cas où cet agent acidifiant est l'acide sulfurique, sa concentration est de préférence comprise entre 40 et 180 g/l, par exemple entre 60 et 130 g/l.

En général, le silicate de métal alcalin M ajouté lors de l'étape (iii) présente une concentration exprimée en silice comprise entre 40 et 330 g/l, par exemple entre 60 et 300 g/l, en particulier entre 60 et 250 g/l.

La réaction de précipitation proprement dite est terminée lorsque l'on a ajouté toute la quantité restante de silicate.

Il peut être avantageux d'effectuer, notamment après l'addition simultanée précitée, un mûrissement du milieu réactionnel, ce mûrissement pouvant par exemple durer de 1 à 60 minutes, en particulier de 5 à 30 minutes.

Il est enfin souhaitable, après la précipitation, dans une étape ultérieure, notamment avant le mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, de préférence entre 4 et 5,5. Elle permet notamment de neutraliser toute la quantité de M₂O ajoutée lors de l'étape (iii) et de régler le pH de la silice finale à la valeur désirée pour une application donnée.

L'agent acidifiant utilisée lors de cette addition est généralement identique à celui employé lors de l'étape (iii) du procédé de préparation selon l'invention.

La température du milieu réactionnel est habituellement comprise entre 60 et 98 °C.

De préférence, l'addition d'agent acidifiant lors de l'étape (ii) s'effectue dans un pied de cuve initial dont la température est comprise entre 60 et 96 °C.

Selon une variante de l'invention, la réaction est effectuée à une température constante comprise entre 75 et 96 °C.

Selon une autre variante de l'invention, la température de fin de réaction est plus élevée que la température de début de réaction : ainsi, on maintient la température au début de la réaction de préférence entre 70 et 96 °C, puis on augmente la température en cours de réaction en quelques minutes, de préférence jusqu'à une valeur comprise entre 75 et 98 °C, par exemple entre 80 et 98 °C , valeur à laquelle elle est maintenue jusqu'à la fin de la réaction.

On obtient, à l'issue des opérations qui viennent d'être décrites, une bouillie de silice qui est ensuite séparée (séparation liquide-solide). Cette séparation consiste généralement en une filtration, suivie d'un lavage si nécessaire. Si la filtration peut se faire selon toute méthode convenable (par exemple par filtre presse ou filtre à bande ou filtre rotatif sous vide), elle est avantageusement effectuée par filtre presse quand la concentration en silicate dans le pied de cuve initial est d'au moins 8 g/l, en particulier comprise entre 10 et 15 g/l, par exemple entre 11 et 15 g/l.

La suspension de silice précipitée ainsi récupérée (gâteau de filtration) est ensuite séchée.

Ce séchage peut se faire selon tout moyen connu en soi.

De préférence, le séchage se fait par atomisation.

A cet effet, on peut utiliser tout type d'atomiseur convenable, notamment des atomiseurs à turbines, à buses, à pression liquide ou à deux fluides.

Le séchage est avantageusement effectué par atomisation au moyen d'un atomiseur à buses quand la concentration en silicate dans le pied de cuve initial est d'au moins 8 g/l , en particulier comprise entre 10 et 15 g/l, par exemple entre 11 et 15 g/l.

La silice précipitée susceptible d'être obtenue dans ces conditions de concentration en silicate et en mettant en oeuvre un filtre presse et un atomiseur à buses se présente généralement sous forme de billes sensiblement sphériques, de préférence d'une taille moyenne d'au moins 80 µm.

Selon une variante du procédé de l'invention, la suspension à sécher présente un taux de matière sèche supérieur à 15 % en poids, de préférence supérieur à 17 % en poids et, par exemple, supérieur à 20 % en poids. Le séchage est alors de préférence effectué au moyen d'un atomiseur à buses.

La silice précipitée susceptible d'être obtenue selon cette variante de l'invention se présente généralement sous forme de billes sensiblement sphériques, de préférence d'une taille moyenne d'au moins 80 µm.

Cette teneur en matière sèche peut être obtenue directement à la filtration en utilisant un filtre convenable (en particulier un filtre presse) donnant un gâteau de filtration à la bonne teneur. Une autre méthode consiste, après la filtration, à une étape ultérieure du procédé, à rajouter au gâteau de la matière sèche, par exemple de la silice sous forme pulvérulente, de manière à obtenir la teneur nécessaire.

Il y a lieu de noter que, comme cela est bien connu, le gâteau ainsi obtenu n'est pas, en général, dans des conditions permettant une atomisation notamment à cause de sa viscosité trop élevée.

D'une manière connue en soi, on soumet alors le gâteau à une opération de délitage. Cette opération peut se faire par passage du gâteau dans un broyeur de type colloïdal ou à bille. Par ailleurs, pour abaisser la viscosité de la suspension à atomiser, il est possible d'ajouter de l'aluminium notamment sous forme d'aluminate de sodium au cours du procédé comme décrit dans la demande de brevet FR-A-2536380 dont l'enseignement est incorporé ici. Cette addition peut se faire en particulier au moment même du délitage.

A l'issue du séchage, on peut procéder à une étape de broyage sur le produit récupéré, notamment sur le produit obtenu par séchage de la suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon une autre variante du procédé de l'invention, la suspension à sécher présente un taux de matière sèche inférieur à 15 % en poids. Le séchage est alors en général effectué au moyen d'un atomiseur à turbines. La silice précipitée qui est alors susceptible d'être obtenue selon cette variante de l'invention se présente généralement sous la forme d'une poudre, de préférence de taille moyenne d'au moins 15 µm, en particulier comprise entre 30 et 150 um, par exemple entre 45 et 120 µm.

Une opération de délitage peut être également ici réalisée.

Enfin, le produit séché (notamment à partir d'une suspension ayant un taux de matière sèche inférieur à 15 % en poids) ou broyé peut, selon une autre variante du procédé de l'invention, être soumis à une étape d'agglomération.

On entend ici par agglomération tout procédé qui permet de lier entre eux des objets finement divisés pour les amener sous la forme d'objets de plus grande taille et résistant mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon cette variante de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé de l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les excellentes propriétés renforçantes intrinsèques attachées à ces poudres, comme cela peut être le cas dans l'art antérieur en mettant en oeuvre des poudres classiques.

D'autres objets de l'invention consistent en de nouvelles silices précipitées ayant une bonne aptitude à la dispersion (et à la désagglomération) et des propriétés renforçantes globalement améliorées, lesdites silices présentant de préférence une taille relativement élevée et étant en général obtenues selon l'une des variantes du procédé de préparation de l'invention décrites précédemment.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude à la dispersion et à la désagglomération des silices selon l'invention peut être quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian Ø₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

Il est maintenant proposé une nouvelle silice précipitée caractérisée en ce qu'elle possède :
- une surface spécifique CTAB (S_{CTAB}) comprise entre 140 et 240 m²/g, de préférence entre 140 et 225 m²/g, par exemple entre 150 et 225 m²/g,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- un facteur de désagglomération aux ultra-sons (F_{D}) supérieur à 5,5 ml,
- un diamètre médian (Ø₅₀), après désagglomération aux ultra-sons, inférieur à 5 µm.

Une des caractéristiques de la silice selon l'invention réside donc également dans la distribution, ou répartition, du volume poreux, et plus particulièrement dans la distribution du volume poreux qui est généré par les pores de diamètres inférieurs ou égaux à 400 Å. Ce dernier volume correspond au volume poreux utile des charges qui sont utilisées dans le renforcement des élastomères. L'analyse des porogrammes montre que les silices selon le second mode de réalisation de l'invention sont telles que moins de 50 %, de préférence moins de 40 %, dudit volume poreux utile est constitué par des pores dont le diamètre est compris dans le plage de 175 à 275 Å.

De manière préférée, les silices selon l'invention possèdent :
. un facteur de désagglomération aux ultra-sons (F_{D}) supérieur à 11 ml, par exemple supérieur à 12,5 ml, et/ou
. un diamètre médian (Ø₅₀), après désagglomération aux ultra-sons, inférieur à 4 µm, par exemple inférieur à 2,5 µm.

Les silices selon l'invention possèdent généralement une surface spécifique BET (S_{BET}) comprise entre 140 et 300 m²/g, en particulier entre 140 et 280 m²/g, par exemple entre 150 et 270 m²/g.

Selon une variante de l'invention, les silices présentent un rapport S_{BET}/S_{CTAB} compris entre 1,0 et 1,2, c'est-à-dire que les silices présentent une faible microporosité.

Selon une autre variante de l'invention, les silices présentent un rapport S_{BET}/S_{CTAB} supérieur à 1,2, par exemple compris entre 1,21 et 1,4, c'est-à-dire que les silices présentent une microporosité relativement élevée.

Les silices selon l'invention possèdent une prise d'huile DOP généralement comprise entre 150 et 400 ml/100 g, plus particulièrement entre 180 et 350 ml/100 g, par exemple entre 200 et 310 ml/100 g.

Les silices selon l'invention peuvent se présenter sous forme de poudre, de billes sensiblement sphériques ou, éventuellement, de granulés, et sont notamment caractérisées par le fait que, tout en ayant une taille relativement élevée, elles présentent une aptitude à la désagglomération et à la dispersion remarquable et des propriétés renforçantes très satisfaisantes. Elles présentent ainsi une aptitude à la désagglomération et à la dispersion avantageusement supérieure, à surface spécifique identique ou proche et à taille identique ou proche, à celles des silices de l'art antérieur.

Les poudres de silice selon l'invention présentent préférentiellement une taille moyenne d'au moins 15 µm ; celle-ci est par exemple comprise entre 20 et 120 µm ou entre 15 et 60 µm (notamment entre 20 et 45 µm) ou entre 30 et 150 µm (notamment entre 45 et 120 µm).

La densité de remplissage à l'état tassé (DRT) desdites poudres est, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent d'obtenir un très bon compromis mise en oeuvre/propriétés mécaniques finales à l'état vulcanisé

Elles constituent enfin des précurseurs privilégiés pour la synthèse de granulés tels que décrits plus loin.

Les billes sensiblement sphériques selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

La densité de remplissage à l'état tassé (DRT) desdites billes est, en général, d'au moins 0,17, et, par exemple, comprise entre 0,2 et 0,34.

Elles présentent généralement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussièrantes et de bonne coulabilité, présente une très bonne aptitude à la désagglomération et à la dispersion. En outre, elle présente d'excellentes propriétés renforçantes. Une telle silice constitue également un précurseur privilégié pour la synthèse des poudres et des granulés selon l'invention.

Les dimensions des granulés selon l'invention sont préférentiellement d'au moins 1 mm, en particulier comprises entre 1 et 10 mm, selon l'axe de leur plus grande dimension (longueur)

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices selon l'invention, notamment sous forme de poudre, de billes sensiblement sphériques ou de granulés, sont de préférence préparées selon l'une des variantes appropriées du procédé de préparation conforme à l'invention et décrit précédemment.

Les silices selon l'invention ou préparées par le procédé selon l'invention trouvent une application particulièrement intéressante dans le renforcement des élastomères, naturels ou synthétiques, et notamment des pneumatiques.Elles confèrent à ces élastomères un excellent compromis entre leurs différentes propriétés mécaniques, et notamment une amélioration significative de leur résistance à la rupture et au déchirement, et, en général, une bonne résistance à l'abrasion. De plus, ces élastomères sont, de préférence, sujets à un échauffement réduit.

Les exemples suivants illustrent l'invention sans toutefois en limiter la portée, les exemples 5,7,8,9 et 11 étant donné à titre comparatif.

### EXEMPLE 1

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,4) ayant une concentration exprimée en silice de 7,1 g/l.

La concentration en silicate exprimée en SiO₂ dans le pied de cuve initial est donc de 7,1 g/l. La solution est alors portée à une température de 85 °C tout en la maintenant sous agitation. L'ensemble de la réaction est effectué à 85 °C. On y introduit ensuite, pendant 3 mn et 20 s, une solution d'acide sulfurique, de concentration égale à 80 g/l, à un débit de 7,3 l/mn ; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 7,3 l/mn, et
- une solution de silicate de sodium, de concentration exprimée en silice égale à 130 g/l, à un débit de 10,1 l/mn.

Lors de cette addition simultanée, le taux de neutralisation instantané est de 92 %, c'est-à-dire que 92 % de la quantité de Na₂O ajoutée (par mn) sont neutralisés.

Le taux de consolidation à l'issue de cette addition simultanée, est égal à 19,6.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 87 % (donc un taux de matière sèche de 13 % en poids).

Ce gâteau est ensuite fluidifié par simple action mécanique. Après cette opération de délitage, la bouillie résultante est atomisée au moyen d'un atomiseur à turbines.

Les caractéristiques de la silice P1 sous forme de poudre (conforme à l'invention) sont alors les suivantes :
- surface spécifique CTAB 159 m²/g
- surface spécifique BET 195 m²/g
- volume poreux V1 représenté par les pores de d ≤ 400 Å 0,94 cm³/g
- volume poreux V2 représenté par les pores 175 Å ≤ d ≤ 275 Å 0,41 cm³/g
- rapport V2/V1 44 %
- taille moyenne des particules 60 µm

On soumet la silice P1 au test de désagglomération tel que défini précédemment dans la description.

Après désagglomération aux ultra-sons, elle présente un diamètre médian (Ø₅₀) de 1,2 µm et un facteur de désagglomération aux ultra-sons (F_{D}) de 12 ml.

### EXEMPLE 2

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,4) ayant une concentration exprimée en silice de 5 g/l.

La concentration en silicate exprimée en SiO₂ dans le pied de cuve initial est donc de 5 g/l. La solution est alors portée à une température de 85 °C tout en la maintenant sous agitation. L'ensemble de la réaction est effectué à 85 °C. On y introduit ensuite, pendant 3 mn et 20 s, une solution d'acide sulfurique, de concentration égale à 80 g/l, à un débit de 5,1 l/mn ; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 5,1 l/mn, et
- une solution de silicate de sodium, de concentration exprimée en silice égale à 130 g/l, à un débit de 7,1 l/mn.

Lors de cette addition simultanée, le taux de neutralisation instantané est de 92 %, c'est-à-dire que 92 % de la quantité de Na₂O ajoutée (par mn) sont neutralisés.

Le taux de consolidation, à l'issue de cette addition simultanée, est égal à 19,5.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 87 % (donc un taux de matière sèche de 13 % en poids).

Ce gâteau est ensuite fluidifié par simple action mécanique. Après cette opération de délitage, la bouillie résultante est atomisée au moyen d'un atomiseur à turbines.

Les caractéristiques de la silice P2 sous forme de poudre (conforme à l'invention) sont alors les suivantes :
- surface spécifique CTAB 182 m²/g
- surface spécifique BET 225 m²/g
- volume poreux V1 représenté par les pores de d ≤ 400 Å 0,93 cm³/g
- volume poreux V2 représenté par les pores 175 Å ≤ d ≤ 275 Å 0,30 cm³/g
- rapport V2/V1 32 %
- taille moyenne des particules 60 µm

On soumet la silice P2 au test de désagglomération tel que défini précédemment dans la description.

Après désagglomération aux ultra-sons, elle présente un diamètre médian (Ø₅₀) de 2,9 µm et un facteur de désagglomération aux ultra-sons (F_{D}) de 14 ml.

### EXEMPLE 3

On procède comme dans l'exemple 2, excepté au niveau de l'addition simultanée des solutions d'acide sulfurique et de silicate de sodium. Ainsi :

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,4) ayant une concentration exprimée en silice de 5 g/l.

La concentration en silicate exprimée en SiO₂ dans le pied de cuve initial est donc de 5 g/l. La solution est alors portée à une température de 85 °C tout en la maintenant sous agitation. L'ensemble de la réaction est effectué à 85 °C. On y introduit ensuite, pendant 3 mn et 20 s, une solution d'acide sulfurique, de concentration égale à 80 g/l, à un débit de 5,1 l/mn ; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 5,1 l/mn, et
- une solution de silicate de sodium, de concentration exprimée en silice égale à 230 g/l, à un débit de 4,1 l/mn.

Lors de cette addition simultanée, le taux de neutralisation instantané est de 92 %, c'est-à-dire que 92 % de la quantité de Na₂O ajoutée (par mn) sont neutralisés.

Le taux de consolidation, à l'issue de cette addition simultanée, est égal à 19,9.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 87,1 % (donc un taux de matière sèche de 12,9 % en poids).

Ce gâteau est ensuite fluidifié par simple action mécanique. Après cette opération de délitage, la bouillie résultante est atomisée au moyen d'un atomiseur à turbines.

Les caractéristiques de la silice P3 sous forme de poudre (conforme à l'invention) sont alors les suivantes :
- surface spécifique CTAB 215 m²/g
- surface spécifique BET 221 m²/g
- volume poreux V1 représenté par les pores de d ≤ 400 Å 0,93 cm³/g
- volume poreux V2 représenté par les pores 175 Å ≤ d ≤ 275 Å 0,42 cm³/g
- rapport V2/V1 45 %
- taille moyenne des particules 60 µm

On soumet la silice P3 au test de désagglomération tel que défini précédemment dans la description.

Après désagglomération aux ultra-sons, elle présente un diamètre médian (Ø₅₀) de 1,2 µm et un facteur de désagglomération aux ultra-sons (F_{D}) de 20 ml.

### EXEMPLE 4

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,4) ayant une concentration exprimée en silice de 3,85 g/l.

La concentration en silicate exprimée en SiO₂ dans le pied de cuve initial est donc de 3,85 g/l. La solution est alors portée à une température de 85 °C tout en la maintenant sous agitation. L'ensemble de la réaction est effectué à 85 °C. On y introduit ensuite, pendant 3 mn et 20 s, une solution d'acide sulfurique, de concentration égale à 80 g/l, à un débit de 3,9 I/mn; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 3,9 l/mn, et
- une solution de silicate de sodium, de concentration exprimée en silice égale à 65 g/l, à un débit de 10,9 l/mn.

Lors de cette addition simultanée, le taux de neutralisation instantané est de 92 %, c'est-à-dire que 92 % de la quantité de Na₂O ajoutée (par mn) sont neutralisés.

Le taux de consolidation, à l'issue de cette addition simultanée, est égal à 19,5.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 87,1 % (donc un taux de matière sèche de 12,9 % en poids).

Ce gâteau est ensuite fluidifié par simple action mécanique. Après cette opération de délitage, la bouillie résultante est atomisée au moyen d'un atomiseur à turbines.

Les caractéristiques de la silice P4 sous forme de poudre (conforme à l'invention) sont alors les suivantes :
- surface spécifique CTAB 210 m²/g
- surface spécifique BET 244 m²/g
- volume poreux V1 représenté par les pores de d ≤ 400 Å 0,89 cm³/g
- volume poreux V2 représenté par les pores 175 Å ≤ d ≤ 275 Å 0,20 cm³/g
- rapport V2/V1 22 %
- taille moyenne des particules 60 µm

On soumet la silice P4 au test de désagglomération tel que défini précédemment dans la description.

Après désagglomération aux ultra-sons, elle présente un diamètre médian (Ø₅₀) de 4,1 µm et un facteur de désagglomération aux ultra-sons (F_{D}) de 13 ml.

### EXEMPLE 5

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,5) ayant une concentration exprimée en silice de 5 g/l.

La concentration en silicate exprimée en SiO₂ dans le pied de cuve initial est donc de 5 g/l. La solution est alors portée à une température de 85 °C tout en la maintenant sous agitation. L'ensemble de la réaction est effectué à 85 °C. On y introduit ensuite, pendant 3 mn et 8 s, une solution d'acide sulfurique, de concentration égale à 80 g/l, à un débit de 5,2 l/mn; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 5,2 I/mn, et
- une solution de silicate de sodium, de concentration exprimée en silice égale à 230 g/l, à un débit de 4,1 l/mn.

Lors de cette addition simultanée, le taux de neutralisation instantané est de 95 %, c'est-à-dire que 95 % de la quantité de Na₂O ajoutée (par mn) sont neutralisés.

Le taux de consolidation, à l'issue de cette addition simultanée, est égal à 19,9.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 86,4 % (donc un taux de matière sèche de 13,6 % en poids).

Ce gâteau est ensuite fluidifié par simple action mécanique. Après cette opération de délitage, la bouillie résultante est atomisée au moyen d'un atomiseur à turbines.

Les caractéristiques de la silice P5 sous forme de poudre sont alors les suivantes:
- surface spécifique CTAB 164 m²/g
- surface spécifique BET 194 m²/g
- volume poreux V1 représenté par les pores de d ≤ 400 Å 1,15 cm³/g
- volume poreux V2 représenté par les pores 175 Å ≤ d ≤ 275 Å 0,70 cm³/g
- rapport V2/V1 61 %
- taille moyenne des particules 65 µm

On soumet la silice P5 au test de désagglomération tel que défini précédemment dans la description.

Après désagglomération aux ultra-sons, elle présente un diamètre médian (Ø₅₀) de 1,2 µm et un facteur de désagglomération aux ultra-sons (F_{D}) de 12 ml.

### EXEMPLE 6

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,5) ayant une concentration exprimée en silice de 5 g/l.

La concentration en silicate exprimée en SiO₂ dans le pied de cuve initial est donc de 5 g/l. La solution est alors portée à une température de 85 °C tout en la maintenant sous agitation. L'ensemble de la réaction est effectué à 85 °C. On y introduit ensuite, pendant 3 mn et 9 s, une solution d'acide sulfurique, de concentration égale à 80 g/l, à un débit de 5,2 l/mn ; à l'issue de cette addition, le taux de neutralisation du pied de cuve est de 85 %, c'est-à-dire que 85 % de la quantité de Na₂O présente dans le pied de cuve initial sont neutralisés.

On introduit ensuite simultanément, pendant 80 mn, dans le milieu réactionnel :
- une solution d'acide sulfurique, de concentration égale à 80 g/l, à un débit de 5,2 l/mn, et
- une solution de silicate de sodium, de concentration exprimée en silice égale à 230 g/l, à un débit de 4,1 l/mn.

Lors de cette addition simultanée, le taux de neutralisation instantané est de 95 %, c'est-à-dire que 95 % de la quantité de Na₂O ajoutée (par mn) sont neutralisés.

Le taux de consolidation, à l'issue de cette addition simultanée, est égal à 22,8.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 86,1 % (donc un taux de matière sèche de 13,9 % en poids).

Ce gâteau est ensuite fluidifié par simple action mécanique. Après cette opération de délitage, la bouillie résultante est atomisée au moyen d'un atomiseur à turbines.

Les caractéristiques de la silice P6 sous forme de poudre (conforme à l'invention) sont alors les suivantes :
- surface spécifique CTAB 157 m²/g
- surface spécifique BET 193 m²/g
- volume poreux V1 représenté par les pores de d ≤ 400 Å 0,95 cm³/g
- volume poreux V2 représenté par les pores 175 Å ≤ d ≤ 275 Å 0,42 cm³/g
- rapport V2/V1 44 %
- taille moyenne des particules 70 µm

On soumet la silice P6 au test de désagglomération tel que défini précédemment dans la description.

Après désagglomération aux ultra-sons, elle présente un diamètre médian (Ø₅₀) de 1,3 µm et un facteur de désagglomération aux ultra-sons (F_{D}) de 10 ml.

### EXEMPLE 7

Dans un réacteur en acier inoxydable muni d'un système d'agitation par hélices et d'un chauffage par double enveloppe, on introduit 662 litres d'une solution de silicate de sodium (de rapport molaire SiO₂/Na₂O égal à 3,5) ayant une concentration exprimée en silice de 5 g/l.

La concentration en silicate exprimée en SiO₂ dans le pied de cuve initial est donc de 5 g/l. La solution est alors portée à une température de 85 °C tout en la maintenant sous agitation. L'ensemble de la réaction est effectué à 85 °C. On y introduit ensuite, pendant 3 mn et 30 s, une solution d'acide sulfurique, de concentration égale à 80 g/l, à un débit de 5.2 l/mn ; à l'issue de cette addition, le taux de neutralisation du pied de cuve est de 95 %, c'est-à-dire que 95 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 5,2 l/mn, et
- une solution de silicate de sodium, de concentration exprimée en silice égale à 230 g/l, à un débit de 4,1 l/mn.

Lors de cette addition simultanée, le taux de neutralisation instantané est de 95 %, c'est-à-dire que 95 % de la quantité de Na₂O ajoutée (par mn) sont neutralisés.

Le taux de consolidation, à l'issue de cette addition simultanée, est égal à 19,9.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On obtient ainsi une bouillie de silice précipitée qui est filtrée et lavée au moyen d'un filtre rotatif sous vide de telle sorte que l'on récupère finalement un gâteau de silice dont la perte au feu est de 86,7 % (donc un taux de matière sèche de 13,3 % en poids).

Ce gâteau est ensuite fluidifié par simple action mécanique. Après cette opération de délitage, la bouillie résultante est atomisée au moyen d'un atomiseur à turbines.

Les caractéristiques de la silice P7 sous forme de poudre sont alors les suivantes :
- surface spécifique CTAB 168 m²/g
- surface spécifique BET 195 m²/g
- volume poreux V1 représenté par les pores de d ≤ 400 Å 0,94 cm³/g
- volume poreux V2 représenté par les pores 175 Å ≤ d ≤ 275 Å 0,47 cm³/g
- rapport V2/V1 50 %
- taille moyenne des particules 65 µm

On soumet la silice P7 au test de désagglomération tel que défini précédemment dans la description.

Après désagglomération aux ultra-sons, elle présente un diamètre médian (Ø₅₀) de 1,1 µm et un facteur de désagglomération aux ultra-sons (F_{D}) de 13 ml.

### EXEMPLE 8

Dans un réacteur en acier inoxydable muni d'un système d'agitation par hélices et d'un chauffage par double enveloppe, on introduit :
- 626 litres d'eau, et
- 36 litres d'une solution de silicate de sodium (de rapport molaire SiO₂/Na₂O égal à 3,4) ayant une concentration exprimée en silice de 135 g/l.

La concentration en silicate exprimée en SiO₂ dans le pied de cuve initial est donc de 7,3 g/l. La solution est alors portée à une température de 85 °C tout en la maintenant sous agitation. L'ensemble de la réaction est effectué à 85 °C. On y introduit ensuite, pendant 3 mn et 30 s, une solution d'acide sulfurique, de concentration égale à 80 g/l, à un débit de 5,6 l/mn ; à l'issue de cette addition, le taux de neutralisation du pied de cuve est de 67 %, c'est-à-dire que 67 % de la quantité de Na₂O présente dans le pied de cuve initial sont neutralisés.

On introduit ensuite simultanément, pendant 70 mn, dans le milieu réactionnel :
- une solution d'acide sulfurique, de concentration égale à 80 g/l, à un débit de 5,6 l/mn, et
- une solution de silicate de sodium, de concentration exprimée en silice égale à 135 g/l, à un débit de 8,6 l/mn.

Lors de cette addition simultanée, le taux de neutralisation instantané est de 80 %, c'est-à-dire que 80 % de la quantité de Na₂O ajoutée (par mn) sont neutralisés.

Le taux de consolidation, à l'issue de cette addition simultanée, est égal à 16,7.

Après introduction de la totalité du silicate, on continue à introduire la solution d'acide sulfurique, au même débit, et ceci pendant 10 mn. Cette introduction complémentaire d'acide amène alors le pH du milieu réactionnel à une valeur égale à 4,5.

On laisse ensuite mûrir le milieu réactionnel pendant 10 mn (sous agitation, à 85 °C)

On obtient ainsi une bouillie de silice précipitée qui, après dilution par 540 litres d'eau, est filtrée et lavée au moyen d'un filtre rotatif sous vide de telle sorte que l'on récupère finalement un gâteau de silice dont la perte au feu est de 88,0 % (donc un taux de matière sèche de 12,0 % en poids).

Ce gâteau est ensuite fluidifié par action mécanique et chimique (ajout d'une quantité d'aluminate de sodium correspondant à un rapport pondéral Al/SiO₂ de 3000 ppm). Après cette opération de délitage, on obtient un gâteau pompable, de pH égal à 6,4, qui est alors atomisé au moyen d'un atomiseur à turbines.

Les caractéristiques de la silice P8 sous forme de poudre sont alors les suivantes :
- surface spécifique CTAB 149 m²/g
- surface spécifique BET 200 m²/g
- volume poreux V1 représenté par les pores de d ≤ 400 Å 0,92 cm³/g
- volume poreux V2 représenté par les pores 175 Å ≤ d ≤ 275 Å 0,50 cm³/g
- rapport V2/V1 54 %
- taille moyenne des billes 55 µm

On soumet la silice P8 au test de désagglomération tel que défini précédemment dans la description.

Après désagglomération aux ultra-sons, elle présente un diamètre médian (Ø₅₀) de 2,3 µm et un facteur de désagglomération aux ultra-sons (F_{D}) de 17 ml.

### EXEMPLE 9

Dans un réacteur en acier inoxydable muni d'un système d'agitation par hélices et d'un chauffage par double enveloppe, on introduit :
- 750 litres d'eau,
- 26,5 litres d'une solution de silicate de sodium (de rapport molaire SiO₂/Na₂O égal à 3,5) ayant une concentration exprimée en silice de 235 g/l.

La concentration en silicate exprimée en SiO₂ dans le pied de cuve initial est donc de 8 g/l. La solution est alors portée à une température de 85 °C tout en la maintenant sous agitation. L'ensemble de la réaction est effectué à 85 °C sous agitation. On y introduit ensuite, pendant 5 mn et 35 s, de l'acide sulfurique dilué, de densité à 20 °C égale à .,050, à un débit de 6,0 l/mn ; à l'issue de cette addition, le taux de neutralisation du pied de cuve est de 95 %, c'est-à-dire que 95 % de la quantité de Na₂O présente dans le pied de cuve initial sont neutralisés.

On introduit ensuite simultanément, pendant 75 mn, dans le milieu réactionnel une solution de silicate de sodium du type décrit ci-avant, à un débit de 4,8 l/mn, et de l'acide sulfurique dilué également du type décrit ci-avant, à un débit régulé de manière à maintenir, dans le milieu réactionnel, le pH à une valeur de 8,5 ± 0,1.

Lors de cette addition simultanée, le taux de neutralisation instantané est de 90 %, c'est-à-dire 90 % de la quantité de Na₂O ajoutée (par mn) sont neutralisés.

Le taux de consolidation, à l'issue de cette addition simultanée, est égal à 13,5.

Après cette addition simultanée, on arrête l'introduction de silicate et on continue à introduire l'acide sulfurique dilué de façon à taire décroître la valeur du pH du milieu réactionnel jusqu'à une valeur égale à 4,0 en 14 mn.

On arrête ensuite l'introduction d'acide, puis on maintient le mélange réactionnel sous agitation pendant 10 mn à une température de 85 °C.

On obtient ainsi une bouillie de silice précipitée qui est filtrée et lavée au moyen d'un filtre presse de telle sorte que l'on récupère finalement un gâteau de silice dont la perte au feu est de 81 % (donc un taux de matière sèche de 19 % en poids).

Ce gâteau est ensuite fluidifié par action mécanique et chimique (ajout d'une quantité d'aluminate de sodium correspondant à un rapport pondéral Al/SiO₂ de 2700 ppm et ajout d'acide sulfurique). Après cette opération de délitage, on obtient un gâteau pompable, de pH égal à 6,7, qui est alors atomisé au moyen d'un atomiseur à buses.

Les caractéristiques de la silice P9 sous forme de billes sensiblement sphériques sont alors les suivantes:
- surface spécifique CTAB 157 m²/g
- surface spécifique BET 194 m²/g
- volume poreux V1 représenté par les pores de d ≤ 400 Å 0,99 cm³/g
- volume poreux V2 représenté par les pores 175 Å ≤ d ≤ 275 Å 0,64 cm³/g
- rapport V2/V1 64 %
- taille moyenne des billes 260 µm

On soumet la silice P9 au test de désagglomération tel que défini précédemment dans la description.

Après désagglomération aux ultra-sons, elle présente un diamètre médian (Ø₅₀) de 1,7 µm et un facteur de désagglomération aux ultra-sons (F_{D}) de 19 ml.

### EXEMPLE 10

Dans un réacteur en acier inoxydable muni d'un système d'agitation par hélices et d'un chauffage par double enveloppe, on introduit:
- 733 litres d'eau, et
- 46,5 litres d'une solution de silicate de sodium (de rapport molaire SiO₂/Na₂O égal à 3,5) ayant une concentration exprimée en silice de 235 g/l.

La concentration en silicate exprimée en SiO₂ dans le pied de cuve initial est donc de 14 g/l. La solution est alors portée à une température de 80 °C tout en la maintenant sous agitation. L'ensemble de la réaction est effectué à 80 °C sous agitation. On y introduit ensuite, pendant 9 mn, de l'acide sulfurique dilué, de densité à 20 °C égale à 1,050, à un débit de 5,4 l/mn ; à l'issue de cette addition, le taux de neutralisation du pied de cuve est de 78 %, c'est-à-dire que 78 % de la quantité de Na₂O présente dans le pied de cuve initial sont neutralisés.

On introduit ensuite simultanément, pendant 90 mn, dans le milieu réactionnel une solution de silicate de sodium du type décrit ci-avant, à un débit de 4,3 l/mn, et de l'acide sulfurique dilué également du type décrit ci-avant, à un débit régulé de manière à maintenir, dans le milieu réactionnel, le pH :
- à une valeur de 8,5 ± 0,1 pendant les 55 premières minutes, puis
- à une valeur de 7,8 ± 0,1 pendant les 35 dernières minutes.

Lors de cette addition simultanée, le taux de neutralisation instantané est de 94 %, c'est-à-dire que 94 % de la quantité de Na₂O ajoutée (par mn) sont neutralisés.

Le taux de consolidation, à l'issue de cette addition simultanée, est égal à 8,3.

Après cette addition simultanée, on arrête l'introduction de silicate et on continue à introduire l'acide sulfuriue dilué de façon à faire décroître la valeur du pH du milieu réactionnel jusqu'à une valeur égale à 4,2 en 6 mn.

On arrête ensuite l'introduction d'acide, puis on maintient le mélange réactionnel sous agitation pendant 10 mn à une température de 80 °C.

On obtient ainsi une bouillie de silice précipitée qui est filtrée et lavée au moyen d'un filtre presse de telle sorte que l'on récupère finalement un gâteau de silice dont la perte au feu est de 77 % (donc un taux de matière sèche de 23 % en poids).

Ce gâteau est ensuite fluidifié par action mécanique et chimique (ajout d'une quantité d'aluminate de sodium correspondant à un rapport pondéral Al/SiO₂ de 3000 ppm et ajout d'acide sulfurique). Après cette opération de délitage, on obtient un gâteau pompable, de pH égal à 6,3, qui est alors atomisé au moyen d'un atomiseur à buses.

Les caractéristiques de la silice P10 sous forme de billes sensiblement sphériques (conforme à l'invention) sont alors les suivantes :
- surface spécifique CTAB 149 m²/g
- surface spécifique BET 177 m²/g
- volume poreux V1 représenté par les pores de d ≤ 400 Å 0,94 cm³/g
- volume poreux V2 représenté par les pores 175 Å ≤ d ≤ 275 Å 0,46 cm³/g
- rapport V2/V1 49 %
- taille moyenne des billes 240 µm

On soumet la silice P10 au test de désagglomération tel que défini précédemment dans la description.

Après désagglomération aux ultra-sons, elle présente un diamètre médian (Ø₅₀) de 1,7 µm et un facteur de désagglomération aux ultra-sons (F_{D}) de 12 ml.

### EXEMPLE 11

Dans un réacteur en acier inoxydable muni d'un système d'agitation par hélices et d'un chauffage par double enveloppe, on introduit :
- 747 litres d'eau, et
- 33,2 litres d'une solution de silicate de sodium (de rapport molaire SiO₂/Na₂O égal à 3,5) ayant une concentration exprimée en silice de 235 g/l.

La concentration en silicate exprimée en SiO₂ dans le pied de cuve initial est donc de 10 g/l. La solution est alors portée à une température de 80 °C tout en la maintenant sous agitation. L'ensemble de la réaction est effectué à 80 °C sous agitation. On y introduit ensuite, pendant 7 mn et 20 s, de l'acide sulfurique dilué, de densité à 20 °C égale à 1,050, à un débit de 5,4 l/mn ; à l'issue de cette addition, le taux de neutralisation du pied de cuve est de 89 %, c'est-à-dire que 89 % de la quantité de Na₂O présente dans le pied de cuve initial sont neutralisés.

On introduit ensuite simultanément, pendant 80 mn, dans le milieu réactionnel une solution de silicate de sodium du type décrit ci-avant, à un débit de 4,3 l/mn, et de l'acide sulfurique dilué également du type décrit ci-avant, à un débit régulé de manière à maintenir, dans le milieu réactionnel, le pH :
- à une valeur de 8,5 ± 0,1 pendant les 55 premières minutes, puis
- à une valeur de 7,8 ± 0,1 pendant les 25 dernières minutes.

Lors de cette addition simultanée, le taux de neutralisation instantané est de 90 %, c'est-à-dire que 90 % de la quantité de Na₂O ajoutée (par mn) sont neutralisés.

Le taux de consolidation, à l'issue de cette addition simultanée, est égal à 10,4.

Après cette addition simultanée, on arrête l'introduction de silicate et on continue à introduire l'acide sulfurique dilué de façon à faire décroître la valeur du pH du milieu réactionnel jusqu'à une valeur égale à 4,3 en 10 mn.

On arrête ensuite l'introduction d'acide, puis on maintient le mélange réactionnel sous agitation pendant 10 mn à une température de 80 °C.

On obtient ainsi une bouillie de silice précipitée qui est filtrée et lavée au moyen d'un filtre presse de telle sorte que l'on récupère finalement un gâteau de silice dont la perte au feu est de 78,5 % (donc un taux de matière sèche de 21,5 % en poids).

Ce gâteau est ensuite fluidifié par action mécanique et chimique (ajout d'une quantité d'aluminate de sodium correspondant à un rapport pondéral Al/SiO₂ de 3000 ppm et ajout d'acide sulfurique). Après cette opération de délitage, on obtient un gâteau pompable, de pH égal à 6,6, qui est alors atomisé au moyen d'un atomiseur à buses.

Les caractéristiques de la silice P11 sous forme de billes sensiblement sphériques sont alors les suivantes :
- surface spécifique CTAB 172 m²/g
- surface spécifique BET 205 m²/g
- volume poreux V1 représenté par les pores de d ≤ 400 Å 1,00 cm³/g
- volume poreux V2 représenté par les pores 175 Å ≤ d ≤ 275 Å 0,57 cm³/g
- rapport V2/V1 57 %
- taille moyenne des billes 270 µm

On soumet la silice P11 au test de désagglomération tel que défini précédemment dans la description.

Après désagglomération aux ultra-sons, elle présente un diamètre médian (Ø₅₀) de 2,3 µm et un facteur de désagglomération aux ultra-sons (F_{D}) de 18,9 ml.

### EXEMPLE 12

A titre comparatif, trois silices, de surface spécifique CTAB comprise entre 140 et 240 m²/g, utilisables comme charges renforçantes pour élastomères, ont été étudiées. Il s'agit :
- d'une part, de deux silices commerciales sous forme de poudre :

- la poudre PERKASIL KS® 404 (référencée PC1 ci-dessous), vendue par la Société AKZO,
- la poudre ULTRASIL VN3® (référencée PC2 ci-dessous), vendue par la Société DEGUSSA,
- d'autre part, de la silice (référencée MP1 ci-dessous), sous forme de billes sensiblement sphériques, de l'exemple 12 de la demande de brevet européen EP-A-0520862 (n° de dépôt 92401677.7).

Les caractéristiques de ces silices sont rassemblées dans le tableau I ci-dessous. Ce tableau reprend également, pour comparaison, les caractéristiques des silices P1 à P11.

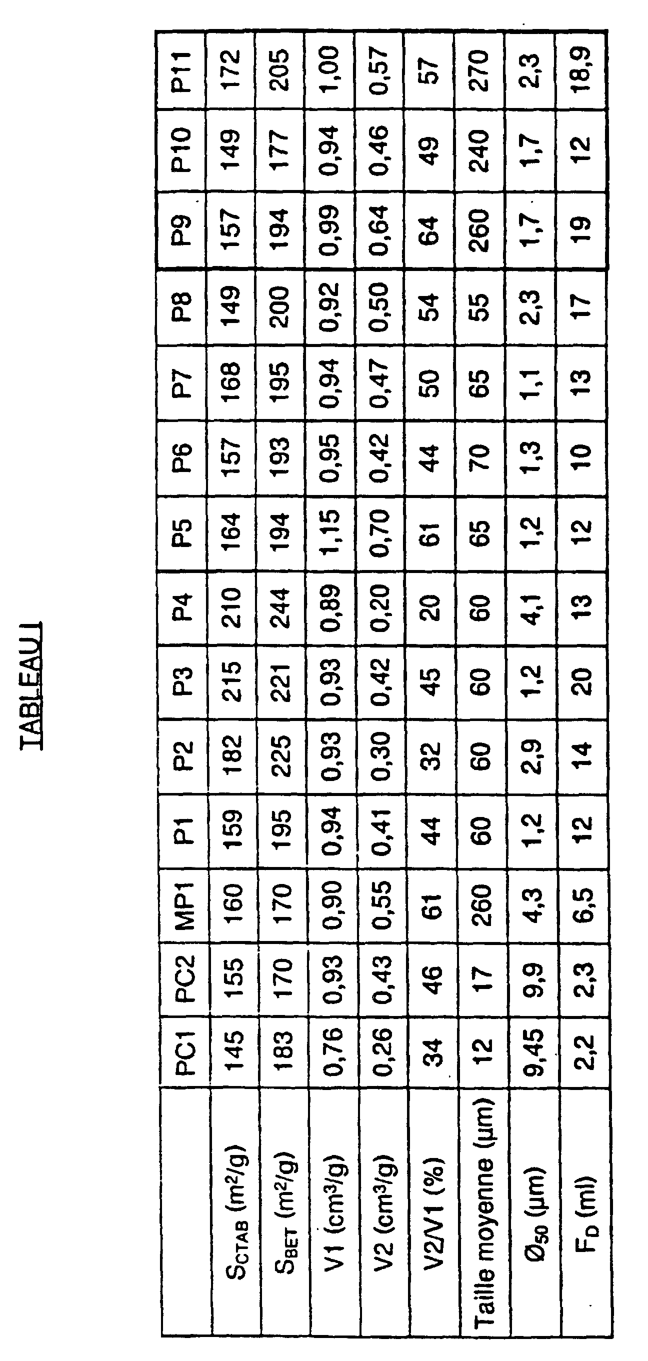

### EXEMPLE 13

Cet exemple illustre l'utilisation et le comportement de silices selon l'invention et de silices de l'art antérieur dans une formulation pour caoutchouc industriel.

On utilise la formulation suivante (en parties, en poids) :
- Caoutchouc S.B.R. 1712⁽¹⁾ 100
- Silice 51
- ZnO actif ⁽²⁾ 1,81
- Acide stéarique 0,35
- 6PPD ⁽³⁾ 1,45
- CBS⁽⁴⁾ 1,3
- DPG ⁽⁵⁾ 1,45
- Soufre ⁽⁶⁾ 1,1
- Silane X50S ⁽⁷⁾ 8,13

(1) Copolymère styrène butadiène type 1712
(2) Oxyde de zinc qualité caoutchouc
(3) N-(diméthyl-1,3 butyl)-N'-phényl-p-phénylène diamine
(4) N-cyclohexyl 2-benzothiazyl sulfènamide
(5) Diphényl guanidine
(6) Agent vulcanisant
(7) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du SBR 1712 (tₒ)(55 °C)
- le X50S et les 2/3 de la silice (tₒ + 1 mn)(90 °C)
- le ZnO, l'acide stéarique, le 6PPD et 1/3 de la silice (tₒ + 2 mn)(110 °C)

La décharge du mélangeur (tombée du mélange) se fait quand la température de la chambre atteint 165 °C (c'est-à-dire, à peu près tₒ + 5 mn). Le mélange est introduit dans un mélangeur à cylindres, maintenus à 30 °C, pour y être calandré. Dans ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Prooriétés rhéologiques

Les mesures sont réalisées sur les formulations à l'état cru.

Les résultats sont reportés dans le tableau II ci-dessous. On a indiqué l'appareillage utilisé pour conduire les mesures.

**TABLEAU II**

| | P5 | P6 | P7 | PC1 | PC2 | MP1 |
|---|---|---|---|---|---|---|
| Consistance MOONEY ⁽¹⁾ | 100 | 93 | 98 | 123 | 138 | 112 |
| Couple mini ⁽²⁾ | 19,0 | 18,5 | 18,7 | 28,0 | 32,2 | 20,5 |

| | | | | | | |
|---|---|---|---|---|---|---|
| (1) Viscosimètre MOONEY MV 200E (mesure de Mooney Large (1 + 4)) | | | | | | |
| (2) Rhéomètre MONSANTO 100 S | | | | | | |

Les formulations obtenues à partir de la silice selon l'invention conduisent aux valeurs les plus faibles.

Ceci traduit une plus grande facilité de mise en oeuvre des mélanges préparés à partir des silices selon l'invention, en particulier au niveau des opérations d'extrusion et de calandrage souvent réalisées lors de la confection des pneumatiques (moindre dépense d'énergie pour mettre en oeuvre le mélange, plus grande facilité d'injection lors du mélangeage, moindre gonflement en filière lors de l'extrusion, moindre retrait au calandrage, ...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées :
(i) essais de traction (modules, résistance à la rupture) NFT 46-002 ou ISO 37-1977
(ii) essais de résistance au déchirement DIN 53-507
(iii) essais de résistance à l'abrasion DIN 53-516

Les résultats obtenus sont consignés dans les tableaux III et IV ci-dessous.

**TABLEAU III**

| | P5 | P6 | P7 | PC1 | PC2 | MP1 |
|---|---|---|---|---|---|---|
| Module 100 % (MPa) | 2,3 | 1,9 | 1,7 | 2,9 | 3,3 | 1,9 |
| Module 300 % (MPa) | 11,1 | 10,3 | 8,5 | 11,7 | 12,2 | 8,3 |
| Indice de renforcement ⁽¹⁾ | 4,8 | 5,4 | 4,9 | 4,0 | 3,7 | 4,4 |
| Résistance rupture (MPa) | 26,4 | 24,5 | 26,0 | 21,1 | 20,9 | 24,4 |
| Résistance déchirement (kN/m) | 21,0 | 22,5 | 21,0 | 13,7 | 14,0 | 20,0 |

| | | | | | | |
|---|---|---|---|---|---|---|
| (1) correspond au rapport : module 300 % / module 100 % | | | | | | |

Ces derniers résultats montrent une amélioration globale de l'effet de renforcement conféré par les silices selon l'invention par rapport à des silices de l'art antérieur de pouvoir renforçant théorique pourtant équivalent.

D'une part, la silice selon l'invention conduit à des indices de renforcement supérieurs à ceux obtenus avec les silices de l'art antérieur, c'est-à-dire à un compromis entre le module 100 % et le module 300 % très satisfaisant : la silice selon l'invention conduit à des modules 100 % assez faibles, preuve d'une bonne dispersion de la silice, et à des modules 300 % relativement élevés, preuve d'une grande densité d'interactions silice/caoutchouc ; si la silice P7 conduit à un module 300 % moins élevé, elle aboutit en même temps à un module 100 % extrêmement faible.

D'autre part, le plus haut pouvoir renforçant de la silice selon l'invention est aussi confirmé par les valeurs élevées obtenues pour la résistance à la rupture et au déchirement.

**TABLEAU IV**

| | P5 | P6 | P7 | PC1 | PC2 | MP1 |
|---|---|---|---|---|---|---|
| Résistance abrasion (mm³) ⁽¹⁾ | 66 | 60 | 65 | 83 | 83 | 75 |

| | | | | | | |
|---|---|---|---|---|---|---|
| (1) la valeur mesurée est la perte à l'abrasion : plus elle est faible et meilleure est la résistance à l'abrasion | | | | | | |

Concernant la résistance à l'abrasion, on note que la perte à l'abrasion est réduite de 10 à plus de 20 % par rapport aux silices comparatives. Il s'agit là d'un avantage important pour l'application pneumatique.

### 3- Propriétés dynamiques

Les mesures sont réalisées sur les formulations vulcanisées.

La vulcanisation est obtenue en portant les formulations à 150 °C pendant 40 minutes.

Les résultats sont reportés dans le tableau V ci-dessous. On a indiqué l'appareillage utilisé pour conduire les mesures.

**TABLEAU V**

| | P5 | P6 | P7 | PC1 | PC2 | MP1 |
|---|---|---|---|---|---|---|
| Echauffement GOODRICH (°C) ⁽¹⁾ | 81 | 80 | 80 | 81 | 86 | 85 |

| | | | | | | |
|---|---|---|---|---|---|---|
| (1) Flexomètre GOODRICH | | | | | | |

L'échauffement obtenu à partir des silices selon l'invention est relativement faible.

### EXEMPLE 14

Cet exemple illustre l'utilisation et le comportement de silices exemplifiées et d'une silice de l'art antérieur dans une formulation pour caoutchouc industriel.

On utilise la formulation suivante (en parties, en poids) :
- Caoutchouc Tufdène 2330 75
- Caoutchouc B.R. 1220 ⁽¹⁾ 25
- Silice 51
- ZnO actif ⁽²⁾ 1,81
- Acide stéarique 1,1
- 6PPD ⁽³⁾ 1,45
- CBS ⁽⁴⁾ 1,3
- DPG⁽⁵⁾ 1,45
- Soufre ⁽⁶⁾ 1,1
- Silane X50S ⁽⁷⁾ 8,13

(1) Polymère butadiène type 1220
(2) Oxyde de zinc qualité caoutchouc
(3) N-(diméthyl-1,3 butyl)-N'-phényl-p-phénylène diamine
(4) N-cyclohexyl 2-benzothiazyl sulfènamide
(5) Diphényl guanidine
(6) Agent vulcanisant
(7) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du Tufdène 2330 et du B.R.1220 (tₒ)(55 °C)
- le X50S et les 2/3 de la silice (tₒ + 1 mn)(90 °C)
- le ZnO, l'acide stéarique, le 6PPD et 1/3 de la silice (tₒ + 2 mn)(110 °C)

La décharge du mélangeur (tombée du mélange) se fait quand la température de la chambre atteint 165 °C (c'est-à-dire, à peu près tₒ + 5 mn). Le mélange est introduit dans un mélangeur à cylindres, maintenus à 30 °C, pour y être calandré. Dans ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru.

Les résultats sont reportés dans le tableau VI ci-dessous. On a indiqué l'appareillage utilisé pour conduire les mesures.

**TABLEAU VI**

| | P9 | P10 | PC2 |
|---|---|---|---|
| Consistance MOONEY ⁽¹⁾ | 115 | 109 | 132 |
| Couple mini ⁽²⁾ | 26,1 | 24,5 | 31,1 |

| | | | |
|---|---|---|---|
| (1) Viscosimètre MOONEY MV 200E (mesure de Mooney Large (1 + 4)) | | | |
| (2) Rhéomètre MONSANTO 100 S | | | |

Les formulations obtenues à partir de la silice selon l'invention conduisent aux valeurs les plus faibles.

Ceci traduit une plus grande facilité de mise en oeuvre des mélanges préparés à partir de silices selon l'invention, en particulier au niveau des opérations d'extrusion et de calandrage souvent réalisées lors de la confection des pneumatiques (moindre dépense d'énergie pour mettre en oeuvre le mélange, plus grande facilité d'injection lors du mélangeage, moindre gonflement en filière lors de l'extrusion, moindre retrait au calandrage, ...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées:
(i) essais de traction (modules, résistance à la rupture) NFT 46-002 ou ISO 37-1977 (DIN 53 504)
(ii) essais de résistance au déchirement NFT 46-007
(iii) essais de résistance à l'abrasion DIN 53-516

Les résultats obtenus sont consignés dans les tableaux VII et VIII ci-dessous.

**TABLEAU VII**

| | P9 | P10 | PC2 |
|---|---|---|---|
| Module 100 % (MPa) | 2,6 | 2,8 | 3,1 |
| Module 300 % (MPa) | 11,4 | 13,1 | 11,1 |
| Indice de renforcement ⁽¹⁾ | 4,4 | 4,7 | 3,6 |
| Résistance rupture (MPa) | 19,4 | 19,7 | 17,1 |
| Résistance déchirement (kN/m) | 37,8 | 39,7 | 33,0 |

| | | | |
|---|---|---|---|
| (1) correspond au rapport : module 300 % / module 100 % | | | |

Ces derniers résultats montrent une amélioration globale de l'effet de renforcement conféré par la silice selon l'invention par rapport à une silice de l'art antérieur de pouvoir renforçant théorique pourtant équivalent.

D'une part, la silice selon l'invention conduit à des indices de renforcement supérieurs à ceux obtenus avec une silice de l'art antérieur, c'est-à-dire à un compromis entre le module 100 % et le module 300 % très satisfaisant : la silice selon l'invention conduit à des modules 100 % assez faibles, preuve d'une bonne dispersion de la silice, et à des modules 300 % relativement élevés, preuve d'une grande densité d'interactions silice/caoutchouc.

D'autre part, le plus haut pouvoir renforçant de la silice selon l'invention est aussi confirmé par les valeurs plus élevées obtenues pour la résistance à la rupture et au déchirement.

**TABLEAU VIII**

| | P9 | P10 | PC2 |
|---|---|---|---|
| Résistance abrasion (mm³) ⁽¹⁾ | 56 | 59 | 63 |

| | | | |
|---|---|---|---|
| (1) la valeur mesurée est la perte à l'abrasion : plus elle est faible et meilleure est la résistance à l'abrasion | | | |

Concernant la résistance à l'abrasion, on note que la perte à l'abrasion est réduite d'environ 10 % par rapport à la silice comparative PC 2. Il s'agit là d'un avantage important pour l'application pneumatique.

## Revendications

1. Silice précipitée **caractérisée en ce qu'**elle possède :
- une surface spécifique CTAB (S_{CTAB}) comprise entre 140 et 240 m²/g,
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- un facteur de désagglomération aux ultra-sons (F_{D}) supérieur à 5,5 ml,
- un diamètre médian (Ø₅₀), après désagglomération aux ultra-sons, inférieur à 5 µm,
et se présente sous au moins une des formes suivantes : billes sensiblement sphériques de taille moyenne d'au moins 80 µm, poudre de taille moyenne d'au moins 15 µm, granulés de taille d'au moins 1 mm.

2. Silice selon la revendication 1, **caractérisée en ce qu'**elle possède une surface spécifique BET (S_{BET}) comprise entre 140 et 300 m²/g.

3. Silice selon l'une des revendications 1 et 2, **caractérisée en ce qu'**elle présente un rapport S_{BET}/S_{CTAB} compris entre 1,0 et 1,2.

4. Silice selon l'une des revendications 1 à 3, **caractérisée en ce qu'**elle présente un rapport S_{BET}/S_{CTAB} supérieur à 1,2.

5. Silice selon l'une des revendications 1 à 4, **caractérisée en ce qu'**elle possède une prise d'huile DOP comprise entre 150 et 400 ml/100 g.

6. Procédé de préparation d'une silice selon l'une des revendications 1 à 5, comprenant la réaction d'un silicate de métal alcalin M avec un agent acidifiant ce par quoi l'on obtient une suspension de silice précipitée, puis la séparation et le séchage de cette suspension, **caractérisé en ce qu'**on réalise la précipitation de la manière suivante :
(i) on forme un pied de cuve initial comportant une partie de la quantité totale du silicate de métal alcalin M engagé dans la réaction, la concentration en silicate (exprimée en SiO₂) dans ledit pied de cuve étant d'au plus 15 g/l,
(ii) on ajoute l'agent acidifiant audit pied de cuve initial jusqu'à ce qu'au moins 50 % de la quantité de M₂O présente dans ledit pied de cuve initial soient neutralisés,
(iii) on ajoute au milieu réactionnel simultanément de l'agent acidifiant et la quantité restante de silicate de métal alcalin M telle que le rapport quantité de silicate ajoutée (exprimée en SiO₂) /quantité de silicate présente dans le pied de cuve initial (exprimée en SiO₂) soit compris entre 12 et 100.

7. Procédé selon la revendication 6, **caractérisé en ce que**, dans l'étape (iii), on ajoute au milieu réactionnel simultanément de l'agent acidifiant et la quantité restante de silicate de métal alcalin M telle que le rapport quantité de silicate ajoutée (exprimée en SiO₂)/quantité de silicate présente dans le pied de cuve initial (exprimée en SiO₂) soit compris entre 12 et 50.

8. Procédé selon l'une des revendications 6 et 7, **caractérisé en ce que**, pendant toute l'étape (iii), la quantité d'agent acidifiant ajoutée est telle que 80 à 99 % de la quantité de M₂O ajoutée soient neutralisés.

9. Procédé selon l'une des revendications 6 à 8, **caractérisé en ce que**, après l'étape (iii), on ajoute au milieu réactionnel une quantité supplémentaire d'agent acidifiant, de préférence jusqu'à l'obtention d'une valeur du pH du milieu réactionnel comprise entre 3 et 6,5.

10. Procédé selon l'une des revendications 6 à 9, **caractérisé en ce qu'**aucun électrolyte n'est utilisé.

11. Procédé selon l'une des revendications 6 à 10, **caractérisé en ce que** ladite concentration en silicate exprimée en SiO₂ dans ledit pied de cuve initial est d'au plus 11 g/l.

12. Procédé selon l'une des revendications 6 à 10, **caractérisé en ce que** ladite concentration en silicate exprimée en SiO₂ dans ledit pied de cuve initial est d'au moins 8 g/l, en particulier d'au moins 10 g/l.

13. Procédé selon la revendication 12, **caractérisé en ce que** ladite séparation comprend une filtration effectuée au moyen d'un filtre presse.

14. Procédé selon l'une des revendications 6 à 11, **caractérisé en ce que** ledit séchage est effectué par atomisation.

15. Procédé selon l'une des revendications 12 et 13, **caractérisé en ce que** ledit séchage est effectué par atomisation au moyen d'un atomiseur à buses.

16. Procédé selon l'une des revendications 14 et 15, **caractérisé en ce que** le produit séché est ensuite aggloméré.

17. Procédé selon l'une des revendications 14 et 15, **caractérisé en ce que** le produit séché est ensuite broyé, puis, éventuellement, aggloméré.

18. Utilisation comme charge renforçante pour élastomères d'une silice selon l'une des revendications 1 à 5.

## Claims

1. A precipitated silica **characterised in that** it has:
- a CTAB specific surface area (S_{CTAB}) of between 140 and 240 m²/g,
- a porous distribution such that the porous volume formed by pores whose diameter is between 175 and 275 Å represents less than 50% of the porous volume formed by pores of diameters less than or equal to 400 Å,
- an ultrasound disagglomeration factor (FD) of higher than 5.5 ml, and
- a median diameter (Ø₅₀) after ultrasound disagglomeration of less than 5 µm,
and is in at least one of the following forms: substantially spherical balls of a mean size of at least 80 µm, powder of a mean size of at least 15 µm and granules of a size of at least 1 mm.

2. A silica according to claim 1 **characterised in that** it has a BET specific surface area (S_{BET}) of between 140 and 300 m²/g.

3. A silica according to one of claims 1 and 2 **characterised in that** it has an S_{BET}/S_{CTAB} ratio of between 1.0 and 1.2.

4. A silica according to one of claims 1 to 3 **characterised in that** it has an S_{BET}/S_{CTAB} ratio of higher than 1.2.

5. A silica according to one of claims 1 to 4 **characterised in that** it has a DOP oil absorption of between 150 and 400 ml/100 mg.

6. A process for the preparation of a silica according to one of claims 1 to 5 comprising the reaction of an alkali metal silicate M with an acidifying agent, thereby obtaining a precipitated silica suspension, then separation and drying of said suspension, **characterised by** effecting precipitation in the following manner:
(i) forming an initial vessel bottoms comprising a part of the total amount of the alkali metal silicate M involved in the reaction, the concentration of silicate (expressed as SiO₂) in said vessel bottoms being at most 15 g/l,
(ii) adding the acidifying agent to said initial vessel bottoms until at least 50% of the amount of M₂O present in said initial vessel bottoms is neutralised, and
(iii) simultaneously adding to the reaction medium acidifying agent and the remaining amount of alkali metal silicate M such that the ratio of the amount of silicate added (expressed as SiO₂)/amount of silicate present in the initial vessel bottoms (expressed as SiO₂) is between 12 and 100.

7. A process according to claim 6 **characterised in that** in step (iii) there is added to the reaction medium simultaneously acidifying agent and the remaining amount of alkali metal silicate M such that the ratio of the amount of silicate added (expressed as SiO₂)/amount of silicate present in the initial vessel bottoms (expressed as SiO₂) is between 12 and 50.

8. A process according to one of claims 6 and 7 **characterised in that** during all of step (iii) the amount of acidifying agent added is such that 80 to 99% of the amount of M₂O added is neutralised.

9. A process according to one of claims 6 to 8 **characterised in that** after step (iii) there is added to the reaction medium a supplementary amount of acidifying agent, preferably until a value of the pH of the reaction medium of between 3 and 6.5 is achieved.

10. A process according to one of claims 6 to 9 **characterised in that** no electrolyte is used.

11. A process according to one of claims 6 to 10 **characterised in that** said concentration of silicate expressed as SiO₂ in said initial vessel bottoms is at most 11 g/l.

12. A process according to one of claims 6 to 10 **characterised in that** said concentration of silicate expressed as SiO₂ in said initial vessel bottoms is at least 8 g/l, in particular at least 10 g/l.

13. A process according to claim 12 **characterised in that** said separation comprises filtration effected by means of a filter press.

14. A process according to one of claims 6 to 11 **characterised in that** said drying operation is effected by atomisation.

15. A process according to one of claims 12 and 13 **characterised in that** said drying operation is effected by atomisation by means of an atomiser having nozzles.

16. A process according to one of claims 14 and 15 **characterised in that** the dried product is then agglomerated.

17. A process according to one of claims 14 and 15 **characterised in that** the dried product is then crushed and then optionally agglomerated.

18. Use as a reinforcing filler for elastomers of a silica according to one of claims 1 to 5.

## Patentansprüche

1. Ausgefälltes Silica, **dadurch gekennzeichnet, dass** es die folgenden Eigenschaften besitzt:
- eine spezifische CTAB-Oberfläche (S_{CTAB}), die zwischen 140 und 240 m²/g liegt,
- eine Porenverteilung, die derart ist, dass das Porenvolumen, das durch Poren mit einem Durchmesser zwischen 175 und 275 Å gebildet wird, weniger als 50 % des Porenvolumens ausmacht, das durch Poren mit Durchmessern von kleiner oder gleich 400 Å gebildet wird,
- einen Ultraschall-Disaggregationsfaktor (F_{D}), der über 5,5 ml liegt,
- einen mittleren Durchmesser (Ø₅₀), nach Disaggregation durch Ultraschall, welcher kleiner als 5 µm ist,
und in wenigstens einer der folgenden Formen vorliegt: im wesentlichen kugelförmigen Kügelchen mit einer mittleren Größe von wenigstens 80 µm, Pulver mit einer mittleren Größe von wenigstens 15 µm, Granalien mit einer Größe von wenigstens 1 mm.

2. Silica nach Anspruch 1, **dadurch gekennzeichnet, dass** dieses eine spezifische BET-Oberfläche (S_{BET}) besitzt, die zwischen 140 und 300 m²/g liegt.

3. Silica nach einem der Ansprüche 1 und 2, **dadurch gekennzeichnet, dass** dieses ein Verhältnis S_{BET}/S_{CTAB} aufweist, das zwischen 1,0 und 1,2 liegt.

4. Silica nach einem der Ansprüche 1 bis 3, **dadurch gekennzeichnet, dass** dieses ein Verhältnis von S_{BET}/S_{CTAB} aufweist, das größer als 1,2 ist.

5. Silica nach einem der Ansprüche 1 bis 4, **dadurch gekennzeichnet, dass** dieses eine Ölzahl DOP aufweist, die zwischen 150 und 400 ml/100 g liegt.

6. Verfahren zur Herstellung eines Silica nach einem der Ansprüche 1 bis 5, welches die Reaktion eines Silicats des Alkalimetalls M mit einem ansäuernden Mittel, wodurch man eine Suspension des ausgefällten Silica erhält, dann die Abtrennung und die Trocknung dieser Suspension umfasst, **dadurch gekennzeichnet, dass** man die Ausfällung auf die folgende Weise durchführt:
(i) man bildet einen anfänglichen Starter, welcher einen Teil der Gesamtmenge des Silicats des Alkalimetalls M, das an der Reaktion beteiligt ist, umfasst, wobei die Konzentration des Silicats (ausgedrückt als SiO₂) in dem Starter höchstens 15 g/l beträgt,
(ii) man gibt das ansäuernde Mittel zu dem anfänglichen Starter hinzu, bis wenigstens 50 % der Menge an M₂O, das in dem anfänglichen Starter vorliegt, neutralisiert ist,
(iii) man gibt zu dem Reaktionsmedium gleichzeitig das ansäuernde Mittel und die restliche Menge des Silicats des Alkalimetalls M hinzu, so dass das Verhältnis der Menge des zugegebenen Silicats (ausgedrückt als SiO₂)/Menge des Silicats, das in dem anfänglichen Starter vorliegt (ausgedrückt als SiO₂), zwischen 12 und 100 liegt.

7. Verfahren nach Anspruch 6, **dadurch gekennzeichnet, dass** man in Schritt (iii) zu dem Reaktionsmedium gleichzeitig das ansäuernde Mittel und die restliche Menge des Silicats des Alkalimetalls M zugibt, so dass das Verhältnis der Menge des zugegebenen Silicats (ausgedrückt als SiO₂)/Menge des Silicats, das in dem anfänglichen Starter vorliegt (ausgedrückt als SiO₂), zwischen 12 und 50 liegt.

8. Verfahren nach einem der Ansprüche 6 und 7, **dadurch gekennzeichnet, dass** während des ganzen Schrittes (iii) die Menge des zugegebenen ansäuernden Mittels derart ist, dass 80 bis 99 % der Menge des zugegebenen M₂O neutralisiert werden.

9. Verfahren nach einem der Ansprüche 6 bis 8, **dadurch gekennzeichnet, dass** man nach dem Schritt (iii) zu dem Reaktionsmedium eine zusätzliche Menge des ansäuernden Mittels, vorzugsweise bis zu dem Erhalt eines pH-Wertes des Reaktionsmediums, der zwischen 3 und 6,5 liegt, zugibt.

10. Verfahren nach einem der Ansprüche 6 bis 9, **dadurch gekennzeichnet, dass** man keinen Elektrolyten verwendet.

11. Verfahren nach einem der Ansprüche 6 bis 10, **dadurch gekennzeichnet, dass** die Konzentration an Silicat, ausgedrückt als SiO₂, in dem anfänglichen Starter höchstens 11 g/l beträgt.

12. Verfahren nach einem der Ansprüche 6 bis 10, **dadurch gekennzeichnet, dass** die Konzentration an Silicat, ausgedrückt als SiO₂, in dem anfänglichen Starter wenigstens 8 g/l, insbesondere wenigstens 10 g/l beträgt.

13. Verfahren nach Anspruch 12, **dadurch gekennzeichnet, dass** die Abtrennung eine Filtration umfasst, die mittels einer Filterpresse durchgeführt wird.

14. Verfahren nach einem der Ansprüche 6 bis 11, **dadurch gekennzeichnet, dass** die Trocknung durch Atomisierung durchgeführt wird.

15. Verfahren nach einem der Ansprüche 12 und 13, **dadurch gekennzeichnet, dass** die Trocknung durch Atomisierung mittels eines Düsenzerstäubers durchgeführt wird.

16. Verfahren nach einem der Ansprüche 14 und 15, **dadurch gekennzeichnet, dass** das getrocknete Produkt anschließend agglomeriert wird,

17. Verfahren nach einem der Ansprüche 14 und 15, **dadurch gekennzeichnet, dass** das getrocknete Produkt anschließend zermahlen wird und dann gegebenenfalls agglomeriert wird.

18. Verwendung eines Silica nach einem der Ansprüche 1 bis 5 als verstärkenden Füllstoff für Elastomere.
